# EUROPEAN PATENT SPECIFICATION

(11) **EP 1 519 001 B1**
(45) Date of publication and mention of the grant of the patent: **12.12.2007**
(21) Application number: 04255558.1
(22) Date of filing: 14.09.2004
(51) Int. Cl.: E21B 17/042

(54) **Thread spacer**
Gewindeabstandhalter
Espaceur de filetage

(30) Priority: 18.09.2003 US 481395
(43) Date of publication of application: 30.03.2005
(73) Proprietor: Grant Prideco LP, Houston, Texas 77060 (US)
(72) Inventor: Alaria, Luigi, 10070 Grosso, Torino (IT); Marchetto, Maurizio, 10070 Corio, Torino (IT)
(74) Representative: Bailey, Richard Alan

(56) References cited:
- EP-A- 0 083 675
- WO-A-03/004826
- FR-A- 2 599 812
- US-A- 2 407 552

## Description

### BACKGROUND OF THE INVENTION NEWPORT

### 1. Field of the Invention.

This invention relates to the industry for the exploration and recovery of minerals from beneath the earth. In particular the invention is a thread spacer that is placed intermediate the threaded couplings used to join the drilling pipes used in this industry.

### 2. Description of the Related Art.

In the pipe industry, particularly pipes related to the exploration and recovery of minerals from beneath the earth, there has been a need to find a way to lubricate and seal the threads of threaded couplings on the pipes. Viscous thread compounds, such as pipe dope and variants thereof, are often used to provide this sealing and lubrication. However, not only are these lubricants difficult to use and to clean up, many contain materials that have been identified as environmental hazards. In addition, these compounds often interfere with the making up of the threaded connections, as the lubricant must be given time to squeeze out from the between the threads as they are made up.

One solution has been to provide intermediate, relatively ductile, solid threaded couplings made of, or plated with, materials with lubricating properties. Typically these materials are comprised of relatively ductile metals such as alloys of copper, lead, silver, etc. It is also possible to make these couplings from the same material as the couplings on the pipes - except that they are made to be more ductile to facilitate 'cold flow' when made up such that they yield during assembly to fill the gaps in the pipe threads, thereby providing a sealing action. Numerous patents have been granted relating to this type of intermediate threaded couplings.

US Patent No. 1,543,963 describes a ductile metallic packing of lead foil. US Patent No. 2,145,168 incorporated by reference herein for all it contains, describes threaded cooperating faces which are sealed by a coating of relatively softer metal to maintain the seal. Furthermore, this coating may be melted to produce a permanent joint. US Patent No. 2,296,198 discloses an intermediate spiral spacer to facilitate making a threadless pipe connection. US Patent No. 2,407,522 discloses a thin thread spacer in the form of a hollow, truncated cone with undulating threads to be disposed intermediate two pipe threaded connections. The spacer forms a gasket between the connections and may or may not have an integral flange. It is preferably formed of copper or a copper based alloy.

A thin threaded bushing with similar characteristics to the '522 patent is disclosed in US Patent No. 2,825,584. In addition, although used for dry wall fasteners, another very similar threaded structure is disclosed in US Patent No. 4,878,794.

US Patent No. 6,371,224 describes a method and apparatus for forming a thread spacer with an integral flange. The spacer is useful for pipe connections used in the drilling industry, and is preferably made of beryllium copper. However, it is known that the integral flange disclosed in this patent often breaks from the cone shaped thread spacer body. Once this fracture occurs, the thread spacer may need to be replaced, depending upon the exact location and magnitude of the crack. Granted Italian Patent No. 01283507 describes a similar beryllium copper thread spacer with an integral flange. It is believed that this design suffers the same cracking problem, as previously described. In both designs, once the flange breaks away from the thread spacer, it is possible that it will fall away from the drill pipe upon disassembly. This becomes a serious problem if the flange and/or the thread spacer falls into the well bore as the drill pipes are detached.

Patent publication No. SU 1834780 describes a method of making a thread spacer for use in pipe connections for the drilling industry. The thread spacer is made by mechanical deformation, and a variety of means for forming threads by mechanical deformation are disclosed.

One problem with these thread spacers is that they do not consistently engage at the same position on the pipe threads. The position of the thread spacer may vary by several thread widths from connection to connection. This problem can be made worse when stabbing the pipes together. If the pipes are not carefully aligned and screwed together, the thread spacer can easily be pushed out of position further into the box connection during the stabbing operation. This may cause severe operational problems due to the taper of the threads. If the thread spacer is not positioned properly along the length of the pipe threads, it may fracture or buckle upon assembly. Once this happens the ability of the thread spacer to carry the loads applied during make-up and operation may be severely compromised. This may lead to premature failure of the pipe coupling during operation.

The drilling Industry's recommendation is to mix the order of the pipes upon reassembly to even the wear among the pipes. This presents an additional problem with these types of thread spacers, as there is a tendency for the spacer to randomly remain with either the box or the pin connections of the pipes upon disassembly. This causes problems when handling the pipe in operation, because when the pipes are reassembled, care must be taken to assure that exactly one thread spacer is positioned between each connection of the pipes. This assurance is quite difficult to achieve in current drill pipe handling practice. Therefore, the tendency of the operator is to reassemble the pipes in exactly the same order as they were disassembled, instead of mixing the order of re-assembly, as recommended.

WO 03/004826 describes a thread spacer of thin, truncated conical form having a flange formed thereon. FR 2599812 describes techniques for securing a thread spacer in position.

According to the invention there is provided a thread spacer for a tapered threaded connection between drill pipes, the thread spacer comprising a thin, hollow, truncated conical member; the conical member comprising an exterior portion and an interior portion, and undulating threads formed on the exterior and interior portions;
wherein the conical member of the thread spacer is fixed upon one of a set of threads of the tapered threaded regions;
the thread spacer comprising a flange and characterised in that the thread spacer further comprises a plurality of pre-cut tabs plurality of pre-cut tabs formed on the conical member; and the flange is attached to the pre-cut tabs of the thread spacer. The invention also relates to a threaded connection and to a drill pipe utilising such a thread spacer.

The present invention is a thread spacer for threaded connections used in the drilling industry. Disclosed is a new thread spacer with an attached flange that is designed to easily break away from a thin thread spacer body. Also disclosed is a new thread spacer with two flanges, one on each end, for use in double shouldered threaded connections. In addition, a flange for a thread spacer is disclosed which has a thickness that takes into consideration not only the displacement in the pipes caused by the insertion of the thread spacer, but also compensated to provide the same stress at the shoulders as the joined pipes achieve without a thread spacer. The flange thickness may be incrementally increased if the flange has a Young's modulus considerably less than that of the connection, and decreased if it has a considerably higher Young's modulus.

Also disclosed is a new thread spacer with a separate flange and a thread spacer flange retention apparatus, which retain the flange on one of the pipe connections when the pipes are separated. In addition, apparatus to cause the thread spacer to remain attached to one of the box and pin connections of a pipe are disclosed.

Further disclosed is a thread spacer without a flange that is disposed between the threaded connections of mating drill pipes. The threads of the connections are designed to accommodate the thickness of the thread spacer so that flanges are not required. It is also possible to adapt the thread form of these connections to allow a more evenly distributed compressive loading on the thread spacer - minimizing potential failures due to over stressing the thread spacer material.

### BRIEF DESCRIPTION OF THE DRAWINGS

Figure 1 is a partial section view of a typical drilling rig using drill pipes with thread spacers of the present invention.
Figure 2A is a single flange thread spacer of the present invention, showing precut tabs to facilitate flange breakout.
Figure 2B is a double flange thread spacer of the present invention, showing two sets of precut tabs to facilitate flange breakout.
Figure 3 is a double shoulder pipe connection utilizing the double flange thread spacer of figure 2B.
Figure 4A is a single shoulder pipe connection utilizing the single flange thread spacer of figure 2A.
Figure 4B is an enlargement of a portion of figure 4A, showing the material left after the flange has broken from the thread spacer.
Figure 5 is a partial section view of a pipe connection with a flange retainer of the present invention, wherein retention is accomplished by utilizing a portion of the thread spacer broken away during assembly.
Figure 6 is a perspective view of a thread spacer with no flanges with precut tabs intended to engage the inside of the pipe connection for retention within the pipe.
Figure 7 is a section view of a double-shouldered pipe connection adapted for use with the flangeless thread spacer similar to that shown in figure 6.
Figure 8A is a partial section view of a threaded box connection adapted with a groove for a thread spacer flange of the present invention.
Figures 8B-8G show various groove configurations of the threaded box connection of Fig. 8A, to retain the flange.
Figure 9A is a partial section view of a threaded pin connection adapted with a groove for a thread spacer flange of the present invention.
Figures 9B-9G show various groove configurations of the threaded pin connection of Fig. 9A, to retain the flange.
Figures 10A-10 J are partial section views of threaded connections illustrating various combinations of the thread spacer and the flange on the box and pin connections.
Figure 11 is a partial section view of a box connection of one embodiment of the invention showing a thread modified such that the thread spacer is retained within the box.
Figure 12 is a partial section view of a pin connection of one embodiment of the invention showing a thread modified such that the thread spacer is retained upon the pin.

### DETAILED DESCRIPTION OF THE INVENTION AND THE PREFERRED EMBODIMENT

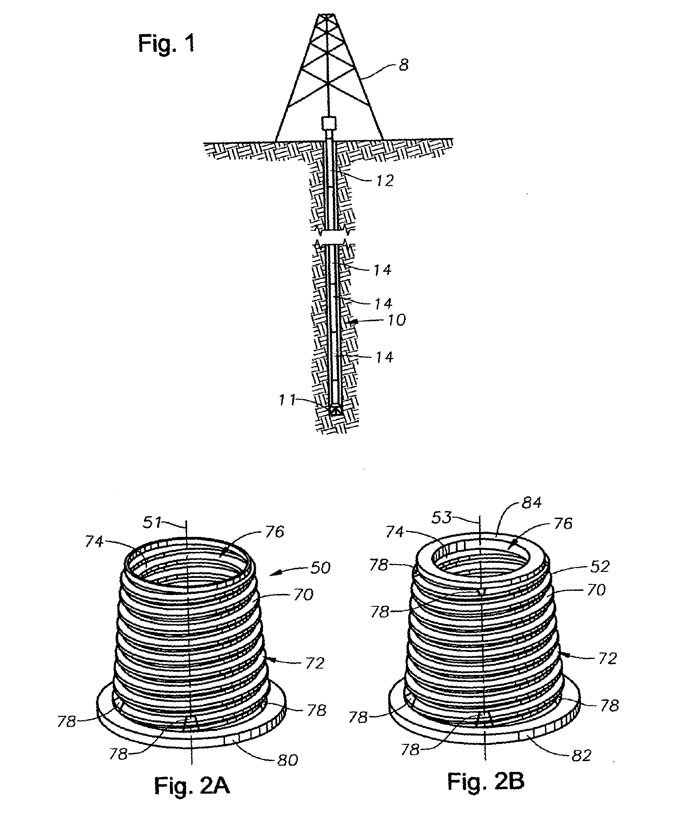

When drilling boreholes into earthen formations, it is common practice to use a bottom hole assembly as shown in Figure 1. The bottom hole assembly, generally indicated as 10, is typically connected to the end of the tubular drill string 12 which is typically rotatably driven by a drilling rig 8 from the surface. In addition to providing motive force for rotating the drill string 12, the drilling rig 8 also supplies a drilling fluid under pressure through the tubular drill string 12 to the bottom hole assembly 10. The drilling fluid is typically laden with abrasive material, as it is repeatedly re-circulated through the borehole. Other components of the bottom hole assembly 10 include a drill bit 11, and various other down hole components.

Typically the drill string 12 is comprised of a plurality of drill pipes 14 joined by a plurality of threaded connections 16, 18, 20, 22, as shown in the Figures, which are typically of tapered configuration. These tapered threaded connections 16, 18, 20, 22 typically have a set of male pipe threads 30, 32, 34, 36, 130 forming what is known as a pin section 31, 33, 35, 37, 131 and a set of female threads 38, 40, 42, 44, 138 forming what is known as a box section 39,41,43,45,139. Typically each drill pipe 14 has a longitudinal axis 98 and one tapered box section and one tapered pin section, one on each end, although it is known to sometimes have pipe sections with box connections on both ends or pin connections on both ends. The box sections 39, 41, 43, 45, 139 are adapted to mate with the pin sections 31, 33, 35, 37, 131 with screw threads to join the drill pipes 14 in a known manner.

The thread spacer 50, 52, 54, 56, 58, 60, 62 of the present invention is disposed between the box sections 39, 41, 43, 45, 139 and the pin sections 31, 33, 35, 37, 131 to provide relief of the friction from sliding, the high stress from tightening and the pressure when the drill pipes 14 are screwed together. The friction, stress and pressure, in combination with the high temperatures and other factors encountered during drilling, had previously caused the threaded connection to be prone to seizing or galling in the threads.

The thread spacer 50 shown in figure 2A is a thin, hollow, truncated conical member of generally uniform thickness with a longitudinal axis 51, 53, 61 and having undulating threads 70 formed on the exterior portion 72 and adapted to be cooperatively engaged with the set of female threads 38, 40, 42, 44, 138 of a box section 39, 41, 43, 45, 139. In a similar manner, undulating threads 74 formed on the interior portion 76 of the thread spacer 50, 52, 54, 56, 58, 60, 62 are adapted to cooperatively engage with the set of male pipe threads 30, 32, 34, 36, 130. Precut tabs 78 may be formed at one or more places along at either end of the thread portion of the spacer 50. The precut tabs 78 have multiple functions, as will be explained.

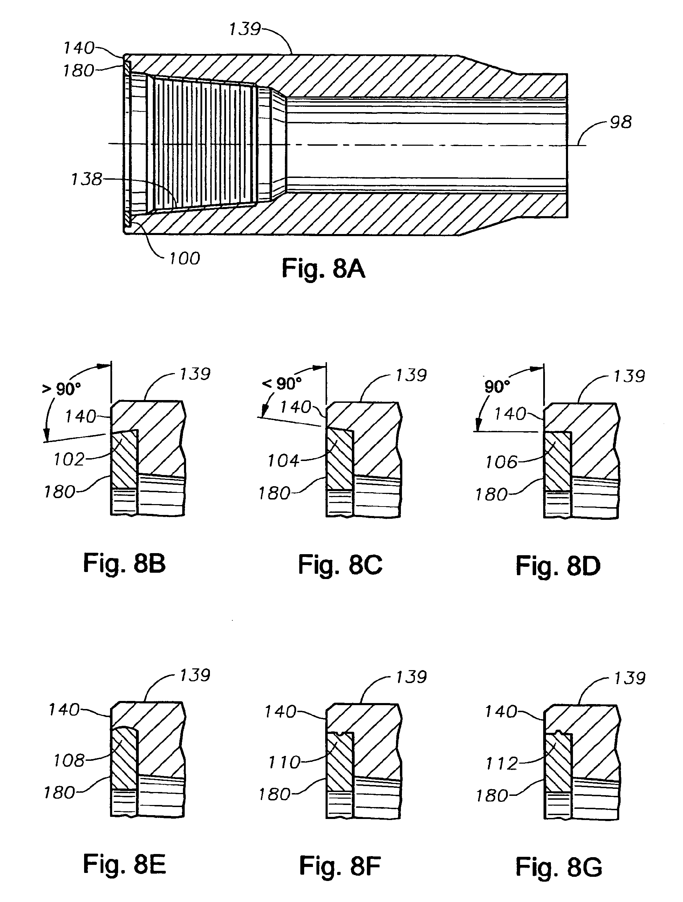

The thread spacer 50, 52, 54, 56, 58, 60, 62 may be formed of any suitable material, including non-metallic composites such as carbon fiber, or may be relatively ductile metallic materials such as copper, copper alloys, especially beryllium copper. It is also possible to use layered metallic materials such as a thin plate of steel clad with copper, silver, other relatively ductile metals, or of alloys thereof It is also possible to provide special treatments to provide high yield strengths for ductile materials, such as found in copper based spinodal alloys. Generally, it is desirable to provide a material for these thread spacers which has a ductility of greater than about 5% and a yield strength of greater than about 817 MPa (120,000 PSI). Purpose built threaded connections may have thread forms that allow very ductile materials for thread spacers 50, 52, 54, 56, 58, 60, 62. For these purpose built connections, yield strengths of the thread spacer material may be less than 344 MPa (50,000 PSI). One such purpose built design is illustrated in figure 7.

It should be noted that the Young's Modulus, or the modulus of elasticity of suitable thread spacer materials might be different from that of the drill pipes 14, as will be discussed.

The thread spacer 50, 52, 54, 56, 58, 60, 62 may have associated with it an OD flange 80, 82 and/or an ID flange 84. The flange 80, 82, 84, 180 may optionally be attached to the thread spacer 50, 52, 54, 56, 58, 60, 62 by attachment to the precut tabs 78. The attachment of the thread spacer to the precut tabs 78 may be made by welding, adhesives, mechanical attachment, tying with wire or other suitable attachments. In use, the flange 80, 82, 84, 180 tends to separate from the thread spacer 50, 52, 54, 56, 58,60,62 so the attachment must be configured in a manner that allows controlled separation of the flange from the thread spacer without significant damage to either. When the flange 80, 82, 84, 180 is attached to the precut tabs 78, the shape, size, and orientation configuration of the precut tabs 78 allows controlled breakage of the tab 78 from the thread spacer in a manner that does not interfere with the threading of the spacer of the pipe 14.

It is also possible to attach the flange 80, 82, 84, 180 directly to other portions of the thread spacer 50, 52, 54, 56, 58, 60, 62 and not to the precut tabs 78, provided the attachment and subsequent breakout is made in a manner that will not cause significant damage to either. For example, the flange may be attached directly to the thread spacer by welding, adhesives, mechanical attachment, tying with wire or other suitable attachments. In this embodiment, however, it is important to minimize the amount of material that breaks off of the thread spacer 50, 52, 54, 56, 58, 60, 62 when the flange 80, 82, 84, 180 separates from it upon assembly with one of the pipes 14.

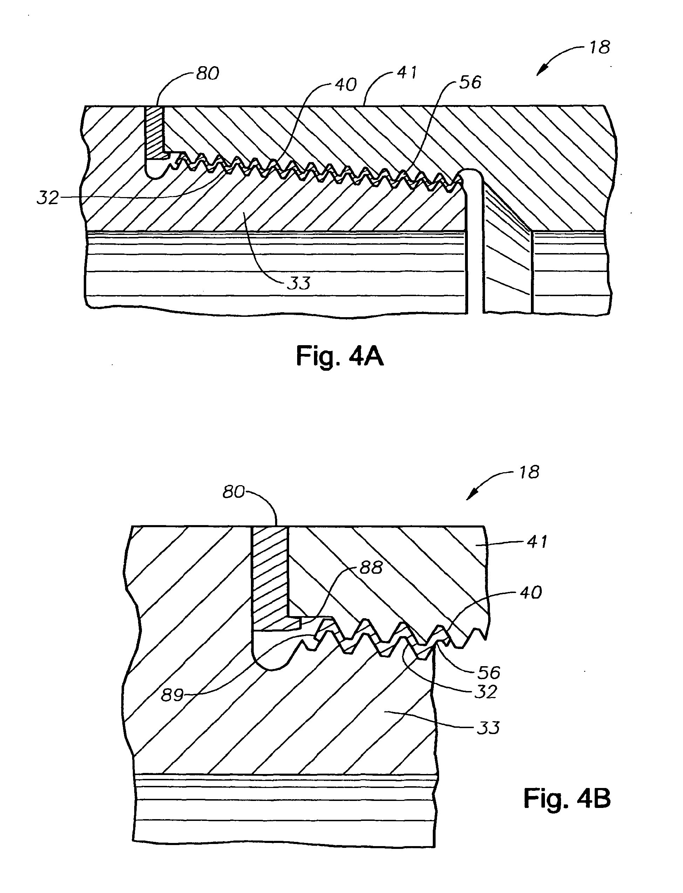

As can be seen in Figures 4A and 4B the remnants 88, 89 remaining attached to the flange 80 and the thread spacer 50, 52, 54, 56, 58, 60, 62 in this manner will not interfere with the operation of the thread spacer or the flange. In fact the remnants 89 remaining attached to the thread spacer 50, 52, 54, 56, 58, 60, 62 may be used as a positive stop to properly locate the thread spacer along the threads. The precut tabs 78 may also be used to locate the thread spacer properly on the threads of the pipes when it is made up. Additionally, the same types of attachments used to retain the flange 80, 82, 84, 180 may be adapted to provide a positive stop to firmly and positively locate the thread spacer 50, 52, 54, 56, 58, 60, 62 in the proper position on the threads 30, 32, 34, 36, 38, 40, 42, 44, 130, 138. Additionally, the fasteners for firmly attaching the thread spacer to the pipe (as described below) may also be suitable locating devices.

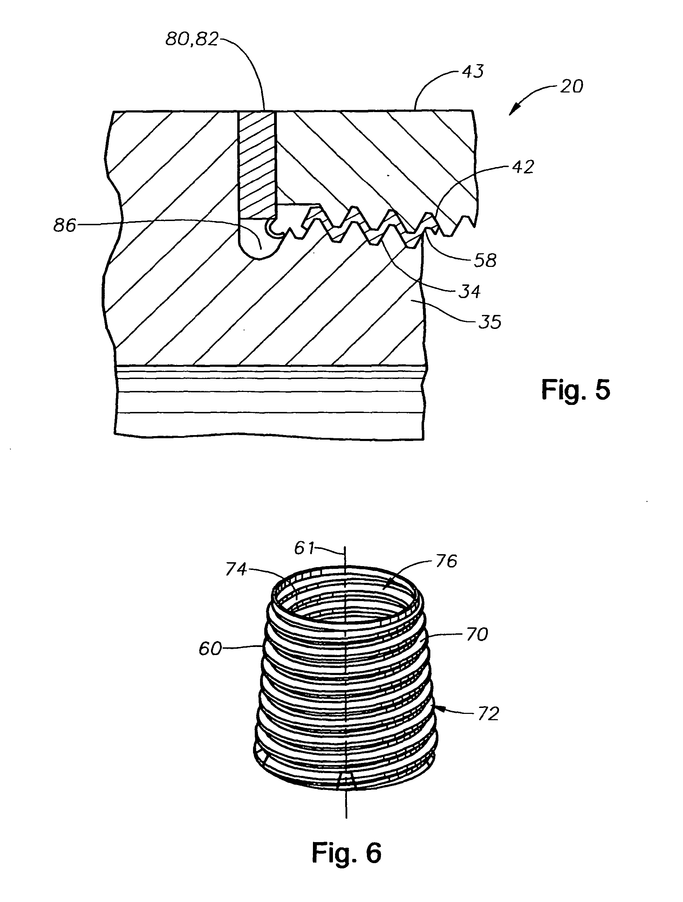

In the course of the drilling operation, it is necessary to make up and breakout the drill pipes repeatedly. In order to prevent the loss of the flange 80, 82, 84, 180 and/or the thread spacer 50, 52, 54, 56, 58, 60, 62 during breakout, it is desirable to retain them upon the tapered threaded connections 16, 18, 20, 22 of the drill pipe 14. In some embodiments, the precut tabs 78 that break away from the thread spacer may remain firmly attached to the flange 80, 82, 84, 180. These remnants of the precut tabs 78 may be configured to help retain the flange 80, 82 on the pin section 31, 33, 35, 37, 131 by engaging a groove 86 in the pin section, as shown in figure 5.

Because the thread spacer 50, 52, 54, 56, 58, 60, 62 can also come loose during operation, an adhesive material may be applied to either the thread spacer or the pipe threads to fix the thread spacer to one of the pin sections 38, 40, 42, 44, 138 or the box sections 39, 41, 43, 45, 139. Alternately, a coating with a high friction factor, such as a layer of thin soft rubber, may be applied to the interior portion 76 or the outer portion 72 of the thread spacer 50, 52, 54, 56, 58, 60, 62 such that the spacer remains fixed upon the pipe 14.

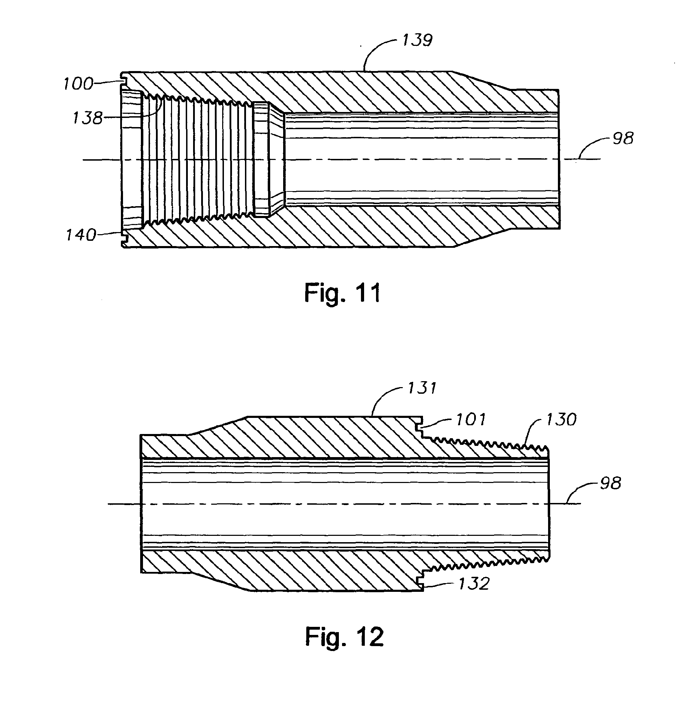

Since a phosphate coating is often applied to the threads 30, 32, 34, 36, 38, 40, 42, 44, 130, 138, for wear resistance, the coating may be applied selectively to one of either the male or female threads to provide a difference in friction of the box 39, 41, 43, 45, 139 and pin 38, 40, 42, 44, 138 sections, causing the thread spacer 50, 52, 54, 56, 58, 60, 62 to remain with, and fixed upon one of the box and pin, whichever has the higher friction. Alternatively - as shown in Figures 11 and 12 one of the sets of threads may be machined or subsequently treated in a manner that provides a suitable difference in friction. For example one of the sets of threads 30, 32, 34, 36, 38, 40, 42, 44, 130, 138 may be machined with small, radial grooves to increase the friction. Also, sandblasting or application of a grit on one set of the threads 30, 32, 34, 36, 38, 40, 42, 44, 130, 138 may also be used to increase the friction.

In a preferred embodiment, the set of the threads 30, 32, 34, 36, 38, 40, 42, 44, 130, 138 are cold worked in some manner and then shot and/or grit blasted to provide this increase in friction. All these provide a suitable difference in friction to fix the thread spacer 50, 52, 54, 56, 58, 60, 62 on to one set of the threads 30, 32, 34, 36, 38, 40, 42, 44, 130, 138.

In another embodiment, the precut tabs 78 of the thread spacer 50, 52, 54, 56, 58, 60, 62 may be deformed in a manner such that they engage a notch (not shown) in the pipe to prevent back off once tightened - or the precut tabs 78 may be oriented in a manner which increases the friction between the thread spacer and the pipe 14 to maintain retention. Additional ways of securing the thread spacer onto the pipe are, modifying the friction characteristics of the pipe threads by providing machines-in interference or by applying various insets and/or lock members. Also, various fasteners such as screws, latches, pins, dimples, etc. which engage mating recesses in the other member may be applied to the thread spacer and/or the pipe to prevent the thread spacer 50, 52, 54, 56, 58, 60, 62 from coming loose. These same fasteners may also be used to positively locate the thread spacer in the proper position with respect to the threads, as previously described.

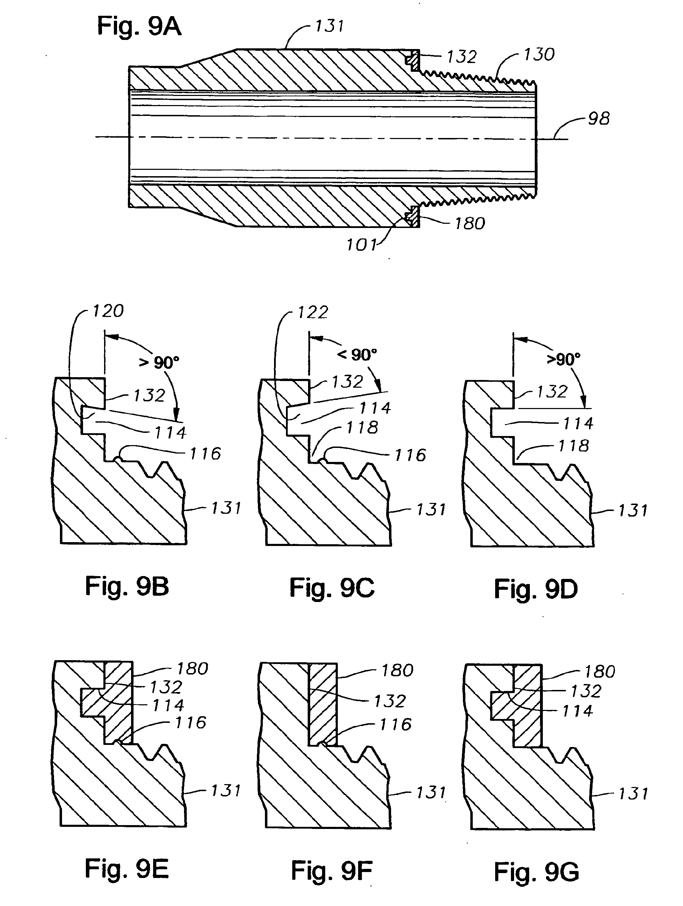

In other embodiments, as shown in Figures 8A-8G and Figures 9A-9G the flange 180 mounted separately from the thread spacer 50, 52, 54, 56, 58, 60, 62. In these embodiments, the flange 180 is designed to lock within one of the pin section 131 and box section 139. In the configuration for the box section 139 shown in Figure 8A, the flange 180 is shown mounted in a groove 100 in the shoulder 140 of the box section 139. As shown in Figure 8B the flange 180 may be retained within an overhanging groove 102, with the 'under hanging' groove 104 of Figure 8C, of the straight ended groove 106 of Figure 8D. Other groove shapes, such as a curved sided groove 108, protruding dimpled groove 110 and recessed dimple groove 112 of Figures 8E-8G. In each of the embodiments of Figures 8A-8G, the flange 180 may be shaped to fit the shape of the groove and pressed fit, shrunk fit (by cooling of the flange or heating of the connection), of interference fitted (pressed) into place in the respective groove 100, 102, 104, 106, 108, 110, 112.

In the configuration of the pin section 131 as shown in Figures 9A-9G the flange 180 is mounted in a "T" shaped groove 101 in the shoulder 132 of the pin section 131. As shown, the flange 180 may be held in place by a protruding dimple 116 formed in the pin section 131, an undercut 118, a secondary groove 114, an overhanging groove 120 as shown in Figure 9B, an 'under hanging' groove 122 as shown in Figure 9C, or any combinations thereof.

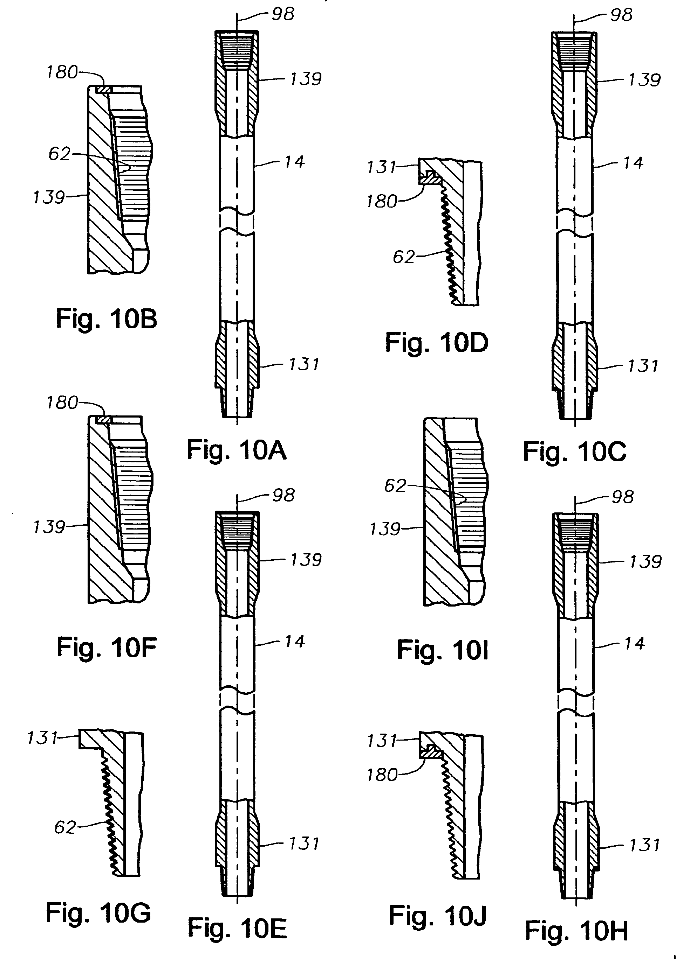

As shown in Figures 10A-10J, there are four basic arrangements for the thread spacer 50, 52, 54, 56, 58, 60, 62 and the flange 80, 82, 84, 180 on a drill pipe 14. Figures 10A and 10B show the flange 80, 82, 84, 180 and the thread spacer 50, 52, 54, 56, 58, 60, 62 both mounted in the box section box section 39, 41, 43, 45, 139 of the drill pipe 14. Figures 10C and 10D show the flange 80, 82, 84, 180 and the thread spacer 50, 52, 54, 56, 58, 60, 62 both mounted in the pin section box section 31, 33, 35, 37, 131 of the drill pipe 14. Figures 10E through 10G show the flange 80, 82, 84, 180 mounted in the box section box section 39, 41, 43, 45, 139 of the drill pipe 14 and the thread spacer 50, 52, 54, 56, 58, 60, 62 mounted in the pin section box section 31, 33, 35, 37, 131 of the drill pipe 14. Finally, Figures 10H through 10J show the thread spacer 50, 52, 54, 56, 58, 60, 62 mounted in the box section box section 39, 41, 43, 45, 139 of the drill pipe 14 and the flange 80, 82, 84, 180 mounted in the pin section box section 31, 33, 35, 37, 131 of the drill pipe 14.

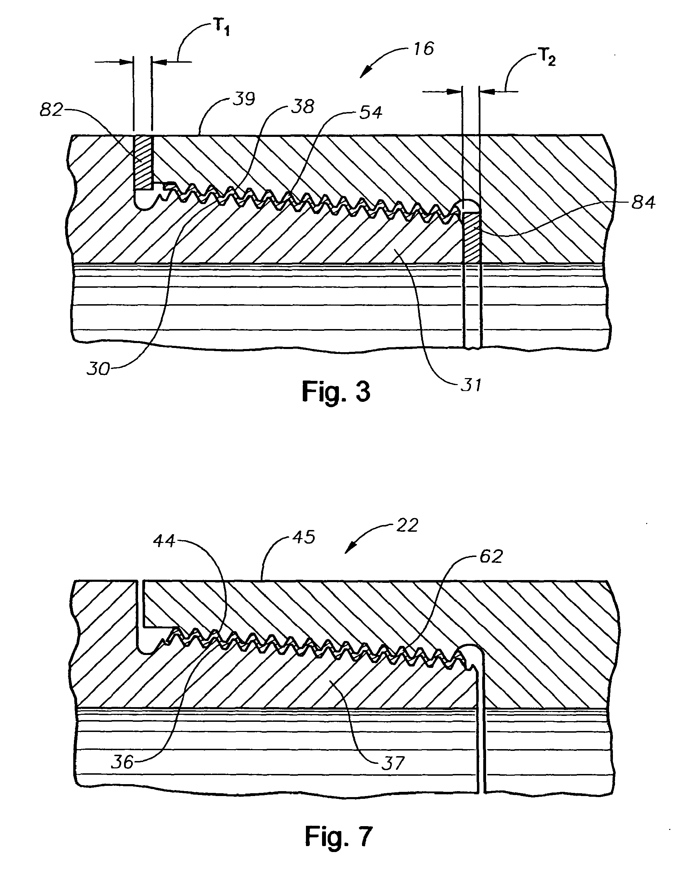

As shown in the double shouldered connection in Fig.3, the flanges 80, 82, 84, 180 have thickness T1 and T2 that may vary depending upon the thickness and form of the threads 70 of the thread spacer 50, 52, 54, 56, 58, 60, 62. Normally, this thickness can be calculated knowing the taper angle and the thread characteristics along with the thickness of cone of the thread spacer 50, 52, 54, 56, 58, 60, 62. In some circumstances, it may be desirable to adjust the thickness T1 and T2 to compensate for differences in the Young's Modulus between the thread spacer material and the pipe 14 material. This may be required to insure that the compressive stress at the shoulders of the pipe is maintained upon makeup at the level necessary to minimize fatigue of the threads of the pipe 14. If the material of the thread spacer has a Young's Modulus considerably less than or considerably greater than the Young's Modulus of the pipe 14 material, the thickness T1 and T2 may have to incrementally increased or decreased accordingly.

Although the examples herein are drawn to the threaded connections on drill pipes, other types of pipes such as casing, production tubing, offshore drill risers, production risers and many other types of piping may also benefit from the new thread spacer disclosed herein. Also, the thread spacers of the present invention may be used in conjunction with pipe couplings, where a separate pipe-coupling member is used to join two pipes together.

## Claims

1. A thread spacer (50) for a tapered threaded connection between drill pipes, the thread spacer comprising a thin, hollow, truncated conical member; the conical member comprising an exterior portion and an interior portion, and undulating threads (70, 74) formed on the exterior and interior portions;
wherein the conical member of the thread spacer is fixed upon one of a set of threads of the tapered threaded regions;
the thread spacer comprising a flange (80, 82, 84) and **characterised in that** the thread spacer further comprises plurality of pre-cut tabs (78) formed on the conical member; and the flange (80, 82, 84) is attached to the pre-cut tabs (78) of the thread spacer.

2. The thread spacer of Claim 1 wherein there are a plurality of flanges (80, 82, 84).

3. The thread spacer of Claim 2 wherein there are a plurality of pre-cut tabs (78) formed on the conical member and wherein each flange (80, 82, 84) is attached to the pre-cut tabs (78) of the thread spacer.

4. The thread spacer of any of the preceding claims, wherein the conical member is fixed upon one of the sets of threads of the tapered threaded connection with a fixative selected from the group consisting of adhesives, pre-cut tabs, sandblasting the set of threads, cold working the set of threads, shot blasting the set of threads, and grit blasting the set of threads.

5. The thread spacer of any of Claims 1 to 3 wherein the conical member is fixed upon one of the set of threads of the tapered threaded connection with a fastener selected from the group consisting of screws, latches, pins, and dimples.

6. The thread spacer of any of the preceding claims wherein the tapered threaded connection comprises a shoulder, and the flange (80, 82, 84) is fixed upon the shoulder.

7. The thread spacer of any of Claims 1 to 5 wherein the tapered threaded connection comprises a male set of threads mated with a female set of threads, and an opposing pair of shoulders; wherein the thread spacer is intermediate the sets of threads, and the flange is compressed between the shoulders.

8. The thread spacer of Claim 7 wherein the flange is fixed upon one of the shoulders.

9. The thread spacer of Claim 8 wherein the flange is fixed within a groove in one of the shoulders.

10. The thread spacer of Claim 9 wherein the flange is fixed in the groove of the shoulder associated with the male set of threads and the conical member is fixed upon the female set of threads.

11. The thread spacer of Claim 9 wherein the flange is fixed in the groove of the shoulder associated with the female set of threads and the conical member is fixed upon the male set of threads.

12. The thread spacer of Claim 9 wherein the flange is fixed in the groove of the shoulder associated with the male set of threads and the conical member is fixed upon the male set of threads.

13. The thread spacer of Claim 9 wherein the flange is fixed in the groove of the shoulder associated with the female set of threads and the conical member is fixed upon the female set of threads.

14. The thread spacer of Claim 9 wherein the groove of the shoulder where the flange is fixed has a configuration, the configuration of the groove is selected from the group consisting of overhanging grooves, under hanging grooves, straight ended grooves, curved sided grooves, protruding dimpled grooves, recessed dimple grooves, "T" shaped grooves with protruding dimples, "T" shaped grooves with undercuts, "T" shaped grooves with secondary grooves, "T" shaped grooves with overhanging grooves, "T" shaped grooves with under hanging grooves and combinations thereof.

15. A tapered threaded connection for drill pipes comprising set of male threads, a set of female threads, and a pair of shoulders, a thread spacer (50) intermediate the set of male threads and the set of female threads;
the thread spacer (50) comprising a thin, hollow, truncated conical member;
the conical member comprising an exterior portion and an interior portion, and undulating threads (70, 74) formed on the exterior and interior portions;
wherein the thread spacer (50) is fixed upon one of the sets of threads;
the thread spacer comprising a flange (80, 82, 84) and **characterised in that** the thread spacer further comprises a plurality of pre-cut tabs (78) formed on the conical member; an the flange (80, 82, 84) is attached to the pre-cut tabs (78) of the thread spacer.

16. The tapered threaded connection of Claim 15 wherein there are a plurality of flanges (80, 82, 84).

17. The tapered threaded connection of Claim 16, wherein there are a plurality of pre-cut tabs (78) formed on the conical member and wherein each flange (80, 82, 84) is attached to the pre-cut tabs (78) of the thread space (50).

18. The tapered threaded connection of any of Claims 15 to 17 wherein the conical member is fixed upon one of the sets of threads of the tapered threaded connection with a fixative selected from the group consisting of adhesives, pre-cut tabs, sandblasting the set of threads, cold working the set of threads, shot blasting the set of threads, and grit blasting the set of threads.

19. The tapered threaded connection of any of Claims 15 to 17 wherein the conical member is fixed upon one of the set of threads of the tapered threaded connection with a fastener selected from the group consisting of screws, latches, pins, and dimples.

20. The tapered threaded connection of any of Claims 15 to 19 wherein the flange is fixed upon one of the shoulders.

21. The tapered threaded connection of any of Claims 15 to 20 wherein the thread spacer is intermediate the sets of threads, and the flange is compressed between the shoulders.

22. The tapered threaded connection of Claim 21 wherein the flange is fixed upon one of the shoulders.

23. The tapered threaded connection of any of Claims 15 to 22 wherein the flange is fixed within a groove in one of the shoulders.

24. The tapered threaded connection of Claim 23 wherein the flange is fixed in the groove of the shoulder associated with the male set of threads and the conical member is fixed upon the female set of threads.

25. The tapered threaded connection of Claim 23 wherein the flange is fixed in the groove of the shoulder associated with the female set of threads and the conical member is fixed upon the male set of threads.

26. The tapered threaded connection of Claim 23 wherein the flange is fixed in the groove of the shoulder associated with the male set of threads and the conical member is fixed upon the male set of threads.

27. The tapered threaded connection of Claim 23 wherein the flange is fixed in the groove of the shoulder associated with the female set of threads and the conical member is fixed upon the female set of threads.

28. The tapered threaded connection of Claims 23 wherein the groove of the shoulder where the flange is fixed as a configuration, and wherein the configuration of the groove is selected from the group consisting of overhanging grooves, under hanging grooves, straight ended grooves, curved sided grooves, protruding dimpled grooves, recessed dimple grooves, "T" shaped grooves with protruding dimples, "T" shaped grooves with undercuts, "T" shaped grooves with secondary grooves, "T" shaped grooves with overhanging grooves, "T" shaped grooves with under hanging grooves and combinations thereof.

29. A drill pipe comprising a longitudinal axis, two tapered ends, a set of threads on each tapered end, and a thread spacer (50);
the thread spacer (50) comprising a thin, hollow, truncated conical member;
the conical member comprising an exterior portion and an interior portion, and undulating threads (70, 74) formed on the exterior and interior portions;
wherein the conical member of the thread spacer (50) is fixed upon one of the sets of threads of the drill pipe;
the thread spacer comprising a flange (80, 82, 84) and **characterised in that** the thread spacer further comprises a plurality of pre-cut tabs (78) formed on the conical member; and the flange (80, 82, 84) is attached to the pre-cut tabs (78) of the thread spacer (50).

30. The drill pipe of Claim 29 wherein there are a plurality of flanges (80, 82, 84).

31. The drill pipe of Claim 30 wherein there are a plurality of pre-cut tabs (78) formed on the conical member and wherein each flange is attached to the pre-cut tabs (78) of the thread spacer.

32. The drill pipe of any of Claims 29 to 31 wherein the conical member is fixed upon one of the sets of threads with a fixative selected from the group consisting of adhesives, pre-cut tabs, sandblasting the set of threads, cold working the set of threads, shot blasting the set of threads, and grit blasting the set of threads.

33. The drill pipe of any of Claims 29 to 31 wherein the conical member is fixed upon one of the set of threads of the drill pipe with a fastener selected from the group consisting of screws, latches, pins, and dimples.

34. The drill pipe of any of Claims 29 to 33 comprising a shoulder on at lest one of the tapered ends wherein the flange is fixed upon the shoulder.

35. The drill pipe of any of Claims 29 to 33 wherein one of the tapered ends comprises a set of threads mated with a corresponding set of threads on a second drill pipe, and opposing shoulders adjacent the sets of threads; wherein the thread spacer is intermediate the sets of threads, and the flange is compressed between the shoulders.

36. The drill pipe of Claim 35 wherein the flange is fixed upon one of the shoulders.

37. The drill pipe of Claim 36 wherein the flange is fixed within a groove in one of the shoulders.

38. The drill pipe of Claim 37 wherein the flange is fixed in the groove of the shoulder associated with a male set of threads and the conical member is fixed upon a female set of threads.

39. The drill pipe of Claim 37 wherein the flange is fixed in the groove of the shoulder associated with a female set of threads and the conical member is fixed upon a male set of threads.

40. The drill pipe of Claim 37 wherein the flange is fixed in the groove of the shoulder associated with a male set of threads and the conical member is fixed upon the male set of threads.

41. The drill pipe of Claim 37 wherein the flange is fixed in the groove of the shoulder associated with a female set of threads and the conical member is fixed upon the female set of threads.

42. The drill pipe of Claim 37 wherein the groove of the shoulder where the flange is fixed has a configuration, the configuration of the groove is selected from the group consisting of overhanging grooves, under hanging grooves, straight ended grooves, curved sided grooves, protruding dimpled grooves, recessed dimple grooves, "T" shaped grooves with protruding dimples, "T" shaped grooves with undercuts, "T" shaped grooves with secondary grooves, "T" shaped grooves with overhanging grooves, "T" shaped grooves with under hanging grooves and combinations thereof.

## Patentansprüche

1. Gewindeabstandshalter (50) für eine verjüngte Gewindeverbindung zwischen Bohrrohren, wobei der Gewindeabstandshalter ein dünnes, hohles, abgestumpftes konisches Element umfasst, wobei das konische Element einen äußeren Abschnitt und einen inneren Abschnitt und wellenförmige Gewindegänge (70, 74), die an dem äußeren und dem inneren Abschnitt geformt sind, umfasst,
wobei das konische Element des Gewindeabstandshalters an einem eines Satzes von Gewindegängen der verjüngten Gewindebereiche befestigt ist,
wobei der Gewindeabstandshalter einen Flansch (80, 82, 84) umfasst, und **dadurch gekennzeichnet, dass** der Gewindeabstandshalter ferner mehrere vorgeschnittene Laschen (78) umfasst, die an dem konischen Element geformt sind, und der Flansch (80, 82, 84) an den vorgeschnittenen Laschen (78) des Gewindeabstandshalters befestigt ist.

2. Gewindeabstandshalter nach Anspruch 1, wobei es mehrere Flansche (80, 82, 84) gibt.

3. Gewindeabstandshalter nach Anspruch 2, wobei es mehrere vorgeschnittene Laschen (78) gibt, die an dem konischen Element geformt sind, und wobei jeder Flansch (80, 82, 84) an den vorgeschnittenen Laschen (78) des Gewindeabständshalters befestigt ist.

4. Gewindeabstandshalter nach einem der vorhergehenden Ansprüche, wobei das konische Element mit einem Fixiermittel an einem der Sätze von Gewindegängen der verjüngten Gewindeverbindung befestigt ist, ausgewählt aus der Gruppe, die aus Klebstoffen, vorgeschnittenen Laschen, Sandstrahlen des Satzes von Gewindegängen, Kaltumformen des Satzes von Gewindegängen, Stahlstrahlen des Satzes von Gewindegängen und Strahlputzen des Satzes von Gewindegängen besteht.

5. Gewindeabstandshalter nach einem der Ansprüche 1 bis 3, wobei das konische Element an einem der Sätze von Gewindegängen der verjüngten Gewindeverbindung mit einem Befestigungselement befestigt ist, ausgewählt aus der Gruppe, die aus Schrauben, Klinken, Stiften und Sicken besteht.

6. Gewindeabstandshalter nach einem der vorhergehenden Ansprüche, wobei die verjüngte Gewindeverbindung einen Absatz umfasst und der Flansch (80, 82, 84) an der Schulter befestigt ist.

7. Gewindeabstandshalter nach einem der Ansprüche 1 bis 5, wobei die verjüngte Gewindeverbindung einen Satz von Außengewindegängen, die mit einem Satz von Innengewindegängen zusammengepasst sind, und ein gegenüberliegendes Paar von Absätzen umfasst, wobei sich der Gewindeabstandshalter zwischen den Sätzen von Gewindegängen befindet und der Flansch zwischen den Absätzen zusammengedrückt wird.

8. Gewindeabstandshalter nach Anspruch 7, wobei der Flansch an einem der Absätze befestigt ist.

9. Gewindeabstandshalter nach Anspruch 8, wobei der Flansch innerhalb einer Rille in einem der Absätze befestigt ist.

10. Gewindeabstandshalter nach Anspruch 9, wobei der Flansch in der Rille desjenigen Absatzes befestigt ist, der dem Satz von Außengewindegängen zugeordnet ist, und das konische Element an dem Satz von Innengewindegängen befestigt ist.

11. Gewindeabstandshalter nach Anspruch 9, wobei der Flansch in der Rille desjenigen Absatzes befestigt ist, der dem Satz von Innengewindegängen zugeordnet ist, und das konische Element an dem Satz von Außengewindegängen befestigt ist.

12. Gewindeabstandshalter nach Anspruch 9, wobei der Flansch in der Rille desjenigen Absatzes befestigt ist, der dem Satz von Außengewindegängen zugeordnet ist, und das konische Element an dem Satz von Außengewindegängen befestigt ist.

13. Gewindeabstandshalter nach Anspruch 9, wobei der Flansch in der Rille desjenigen Absatzes befestigt ist, der dem Satz von Innengewindegängen zugeordnet ist, und das konische Element an dem Satz von Innengewindegängen befestigt ist.

14. Gewindeabstandshalter nach Anspruch 9, wobei die Rille des Absatzes, wo der Flansch befestigt ist, eine Konfiguration hat, wobei die Konfiguration der Rille ausgewählt ist aus der Gruppe, die aus überhängenden Rillen, unterhängenden Rillen, Rillen mit geraden Enden, Rillen mit gekrümmten Seiten, mit vorspringenden Sicken versehenen Rillen, mit eingezogenen Sicken versehenen Rillen, "T"-förmigen Rillen mit vorspringenden Sicken, "T"-förmigen Rillen mit Unterschneidungen, "T"-förmigen Rillen mit Sekundärrillen, "T"-förmigen Rillen mit überhängenden Rillen, "T"-förmigen Rillen mit unterhängenden Rillen und Kombinationen derselben besteht.

15. Verjüngte Gewindeverbindung für Bohrrohre, die einen Satz von Außengewindegängen, einen Satz von Innengewindegängen und ein Paar von Absätzen umfasst, wobei sich ein Gewindeabstandshalter (50) zwischen dem Satz von Außengewindegängen und dem Satz von Innengewindegängen befindet,
wobei der Gewindeabstandshalter (50) ein dünnes, hohles, abgestumpftes konisches Element umfasst,
wobei das konische Element einen äußeren Abschnitt und einen inneren Abschnitt und wellenförmige Gewindegänge (70, 74), die an dem äußeren und dem inneren Abschnitt geformt sind, umfasst,
wobei der Gewindeabstandshalter (50) an einem der Sätze von Gewindegängen befestigt ist,
wobei der Gewindeabstandshalter einen Flansch (80, 82, 84) umfasst, und **dadurch gekennzeichnet, dass** der Gewindeabstandshalter ferner mehrere vorgeschnittene Laschen (78) umfasst, die an dem konischen Element geformt sind, und der Flansch (80, 82, 84) an den vorgeschnittenen Laschen (78) des Gewindeabstandshalters befestigt ist.

16. Verjüngte Gewindeverbindung nach Anspruch 15, wobei es mehrere Flansche (80, 82, 84) gibt.

17. Verjüngte Gewindeverbindung nach Anspruch 16, wobei es mehrere vorgeschnittene Laschen (78) gibt, die an dem konischen Element geformt sind, und wobei jeder Flansch (80, 82, 84) an den vorgeschnittenen Laschen (78) des Gewindeabstandshalters befestigt ist.

18. Verjüngte Gewindeverbindung nach einem der Ansprüche 15 bis 17, wobei das konische Element mit einem Fixiermittel an einem der Sätze von Gewindegängen der verjüngten Gewindeverbindung befestigt ist, ausgewählt aus der Gruppe, die aus Klebstoffen, vorgeschnittenen Laschen, Sandstrahlen des Satzes von Gewindegängen, Kaltumformen des Satzes von Gewindegängen, Stahlstrahlen des Satzes von Gewindegängen und Strahlputzen des Satzes von Gewindegängen besteht.

19. Verjüngte Gewindeverbindung nach einem der Ansprüche 15 bis 17, wobei das konische Element mit einem Befestigungselement an einem der Sätze von Gewindegängen der verjüngten Gewindeverbindung befestigt ist, ausgewählt aus der Gruppe, die aus Schrauben, Klinken, Stiften und Sicken besteht.

20. Verjüngte Gewindeverbindung nach einem der Ansprüche 15 bis 19, wobei der Flansch an einem der Absätze befestigt ist.

21. Verjüngte Gewindeverbindung nach einem der Ansprüche 15 bis 20, wobei sich der Gewindeabstandshalter zwischen den Sätzen von Gewindegängen befindet und der Flansch zwischen den Absätzen zusammengedrückt wird.

22. Verjüngte Gewindeverbindung nach Anspruch 21, wobei der Flansch an einem der Absätze befestigt ist.

23. Verjüngte Gewindeverbindung nach einem der Ansprüche 15 bis 22, wobei der Flansch innerhalb einer Rille in einem der Absätze befestigt ist.

24. Verjüngte Gewindeverbindung nach Anspruch 23, wobei der Flansch in der Rille desjenigen Absatzes befestigt ist, der dem Satz von Außengewindegängen zugeordnet ist, und das konische Element an dem Satz von Innengewindegängen befestigt ist.

25. Verjüngte Gewindeverbindung nach Anspruch 23, wobei der Flansch in der Rille desjenigen Absatzes befestigt ist, der dem Satz von Innengewindegängen zugeordnet ist, und das konische Element an dem Satz von Außengewindegängen befestigt ist.

26. Verjüngte Gewindeverbindung nach Anspruch 23, wobei der Flansch in der Rille desjenigen Absatzes befestigt ist, der dem Satz von Außengewindegängen zugeordnet ist, und das konische Element an dem Satz von Außengewindegängen befestigt ist.

27. Verjüngte Gewindeverbindung nach Anspruch 23, wobei der Flansch in der Rille desjenigen Absatzes befestigt ist, der dem Satz von Innengewindegängen zugeordnet ist, und das konische Element an dem Satz von Innengewindegängen befestigt ist.

28. Verjüngte Gewindeverbindung nach Anspruch 23, wobei die Rille des Absatzes, wo der Flansch befestigt ist, eine Konfiguration hat, wobei die Konfiguration der Rille ausgewählt ist aus der Gruppe, die aus überhängenden Rillen, unterhängenden Rillen, Rillen mit geraden Enden, Rillen mit gekrümmten Seiten, mit vorspringenden Sicken versehenen Rillen, mit eingezogenen Sicken versehenen Rillen, "T"-förmigen Rillen mit vorspringenden Sicken, "T"-förmigen Rillen mit Unterschneidungen, "T"-förmigen Rillen mit Sekundärrillen, "T"-förmigen Rillen mit überhängenden Rillen, "T"-förmigen Rillen mit unterhängenden Rillen und Kombinationen derselben besteht.

29. Bohrrohr, das eine Längsachse, zwei verjüngte Enden, einen Satz von Gewindegängen an jedem verjüngten Ende und einen Gewindeabstandshalter (50) umfasst,
wobei der Gewindeabstandshalter (50) ein dünnes, hohles, abgestumpftes konisches Element umfasst,
wobei das konische Element einen äußeren Abschnitt und einen inneren Abschnitt und wellenförmige Gewindegänge (70, 74), die an dem äußeren und dem inneren Abschnitt geformt sind, umfasst,
wobei das konische Element des Gewindeabstandshalters (50) an einem der Sätze von Gewindegängen des Bohrrohres befestigt ist,
wobei der Gewindeabstandshalter einen Flansch (80, 82, 84) umfasst, und **dadurch gekennzeichnet, dass** der Gewindeabstandshalter ferner mehrere vorgeschnittene Laschen (78) umfasst, die an dem konischen Element geformt sind, und der Flansch (80, 82, 84) an den vorgeschnittenen Laschen (78) des Gewindeabstandshalters (50) befestigt ist.

30. Bohrrohr nach Anspruch 29, wobei es mehrere Flansche (80, 82, 84) gibt.

31. Bohrrohr nach Anspruch 30, wobei es mehrere vorgeschnittene Laschen (78) gibt, die an dem konischen Element geformt sind, und wobei jeder Flansch (80, 82, 84) an den vorgeschnittenen Laschen (78) des Gewindeabstandshalters befestigt ist.

32. Bohrrohr nach einem der Ansprüche 29 bis 31, wobei das konische Element mit einem Fixiermittel an einem der Sätze von Gewindegängen befestigt ist, ausgewählt aus der Gruppe, die aus Klebstoffen, vorgeschnittenen Laschen, Sandstrahlen des Satzes von Gewindegängen, Kaltumformen des Satzes von Gewindegängen, Stahlstrahlen des Satzes von Gewindegängen und Strahlputzen des Satzes von Gewindegängen besteht.

33. Bohrrohr nach einem der Ansprüche 29 bis 31, wobei das konische Element mit einem Befestigungselement an einem der Sätze von Gewindegängen des Bohrrohres befestigt ist, ausgewählt aus der Gruppe, die aus Schrauben, Klinken, Stiften und Sicken besteht.

34. Bohrrohr nach einem der Ansprüche 29 bis 33, das an wenigstens einem der verjüngten Enden einen Absatz umfasst, wobei der Flansch an dem Absatz befestigt ist.

35. Bohrrohr nach einem der Ansprüche 29 bis 33, wobei eines der verjüngten Enden einen Satz von Gewindegängen, die mit einem entsprechenden Satz von Gewindegängen an einem zweiten Bohrrohr zusammengepasst sind, und angrenzend an die Sätze von Gewindegängen gegenüberliegende Absätze umfasst, wobei sich der Gewindeabstandshalter zwischen den Sätzen von Gewindegängen befindet und der Flansch zwischen den Absätzen zusammengedrückt wird.

36. Bohrrohr nach Anspruch 35, wobei der Flansch an einem der Absätze befestigt ist.

37. Bohrrohr nach Anspruch 36, wobei der Flansch innerhalb einer Rille in einem der Absätze befestigt ist.

38. Bohrrohr nach Anspruch 37, wobei der Flansch in der Rille desjenigen Absatzes befestigt ist, der einem Satz von Außengewindegängen zugeordnet ist, und das konische Element an einem Satz von Innengewindegängen befestigt ist.

39. Bohrrohr nach Anspruch 37, wobei der Flansch in der Rille desjenigen Absatzes befestigt ist, der einem Satz von Innengewindegängen zugeordnet ist, und das konische Element an einem Satz von Außengewindegängen befestigt ist.

40. Bohrrohr nach Anspruch 37, wobei der Flansch in der Rille desjenigen Absatzes befestigt ist, der einem Satz von Außengewindegängen zugeordnet ist, und das konische Element an einem Satz von Außengewindegängen befestigt ist.

41. Bohrrohr nach Anspruch 37, wobei der Flansch in der Rille desjenigen Absatzes befestigt ist, der einem Satz von Innengewindegängen zugeordnet ist, und das konische Element an einem Satz von Innengewindegängen befestigt ist.

42. Bohrrohr nach Anspruch 37, wobei die Rille des Absatzes, wo der Flansch befestigt ist, eine Konfiguration hat, wobei die Konfiguration der Rille ausgewählt ist aus der Gruppe, die aus überhängenden Rillen, unterhängenden Rillen, Rillen mit geraden Enden, Rillen mit gekrümmten Seiten, mit vorspringenden Sicken versehenen Rillen, mit eingezogenen Sicken versehenen Rillen, "T"-förmigen Rillen mit vorspringenden Sicken, "T"-förmigen Rillen mit Unterschneidungen, "T"-förmigen Rillen mit Sekundärrillen, "T"-förmigen Rillen mit überhängenden Rillen, "T"-förmigen Rillen mit unterhängenden Rillen und Kombinationen derselben besteht.

## Revendications

1. Espaceur de filetage (50) pour un raccord fileté effilé entre des tiges de forage, l'espaceur de filetage comprenant un élément tronconique mince et creux; l'élément conique comprenant une partie extérieure et une partie intérieure, et des filets ondulés (70, 74) formés sur les parties extérieure et intérieure;
dans lequel l'élément conique de l'espaceur de filetage est fixé sur l'un d'un jeu de filets sur les régions filetées effilées;
l'espaceur de filetage comprenant une collerette (80, 82, 84) et **caractérisé en ce que** l'espaceur de filetage comprend en outre une pluralité de pattes prédécoupées (78) formées sur l'élément conique; et la collerette (80, 82, 84) est fixée aux pattes prédécoupées (78) de l'espaceur de filetage.

2. Espaceur de filetage selon la revendication 1, dans lequel il y a une pluralité de collerettes (80, 82, 84).

3. Espaceur de filetage selon la revendication 2, dans lequel il y a une pluralité de pattes prédécoupées (78) formées sur l'élément conique, et dans lequel chaque collerette (80, 82, 84) est fixée aux pattes prédécoupées (78) de l'espaceur de filetage.

4. Espaceur de filetage selon l'une quelconque des revendications précédentes, dans lequel l'élément conique est fixé sur l'un des jeux de filets du raccord fileté effilé avec un fixateur sélectionné dans le groupe constitué d'adhésifs, de pattes prédécoupées, du sablage du jeu de filet, du façonnage à froid du jeu de filets, du décapage à la grenaille du jeu de filets et du grenaillage du jeu de filets.

5. Espaceur de filetage selon l'une quelconque des revendications 1 à 3, dans lequel l'élément conique est fixé sur l'un des jeux de filets du raccord fileté effilé avec un élément de fixation sélectionné dans le groupe constitué des vis, des verrous, des goupilles et des crans d'arrêt.

6. Espaceur de filetage selon l'une quelconque des revendications précédentes, dans lequel le raccord fileté effilé comprend un épaulement, et la collerette (80, 82, 84) est fixée sur l'épaulement.

7. Espaceur de filetage selon l'une quelconque des revendications 1 à 5, dans lequel le raccord fileté effilé comprend un jeu de filets mâle conjugué à un jeu de filets femelle, et une paire opposée d'épaulements; dans lequel l'espaceur de filetage est situé à une position intermédiaire entre les jeux de filets, et la collerette est comprimée entre les épaulements.

8. Espaceur de filetage selon la revendication 7, dans lequel la collerette est fixée sur l'un des épaulements.

9. Espaceur de filetage selon la revendication 8, dans lequel la collerette est fixée dans une rainure dans l'un des épaulements.

10. Espaceur de filetage selon la revendication 9, dans lequel la collerette est fixée dans la rainure de l'épaulement associé au jeu de filets mâle et l'élément conique est fixé sur le jeu de filets femelle.

11. Espaceur de filetage selon la revendication 9, dans lequel la collerette est fixée dans la rainure de l'épaulement associé au jeu de filets femelle et l'élément conique est fixé sur le jeu de filets mâle.

12. Espaceur de filetage selon la revendication 9, dans lequel la collerette est fixée dans la rainure de l'épaulement associé au jeu de filets mâle et l'élément conique est fixé sur le jeu de filets mâle.

13. Espaceur de filetage selon la revendication 9, dans lequel la collerette est fixée dans la rainure de l'épaulement associé au jeu de filets femelle et l'élément conique est fixé sur le jeu de filets femelle.

14. Espaceur de filetage selon la revendication 9, dans lequel la rainure de l'épaulement où la collerette est fixée a une configuration, la configuration de la rainure est sélectionnée dans le groupe constitué de rainures en surplomb, de rainures en retrait, de rainures à extrémités droites, de rainures à côtés incurvés, de rainures à crans d'arrêt saillants, de rainures à crans d'arrêt renfoncés, de rainures en forme de "T" ayant des crans d'arrêt saillants, de rainures en forme de "T" ayant des encoches, de rainures en forme de "T" ayant des rainures secondaires, de rainures en forme de "T" ayant des rainures en surplomb, de rainures en forme de "T" ayant des rainures en retrait et leurs combinaisons.

15. Raccord fileté effilé pour des tiges de forage comprenant un jeu de filets mâles, un jeu de filets femelles et une paire d'épaulements, un espaceur de filetage (50) à une position intermédiaire entre le jeu de filets mâles et le jeu de filets femelles;
l'espaceur de filetage (50) comprenant un élément tronconique mince et creux;
l'élément conique comprenant une partie extérieure et une partie intérieure, et des filets ondulés (70, 74) formés sur les parties extérieure et intérieure;
dans lequel l'espaceur de filetage (50) est fixé sur l'un des jeux de filets;
l'espaceur de filetage comprenant une collerette (80, 82, 84) et **caractérisé en ce que** l'espaceur de filetage comprend en outre une pluralité de pattes prédécoupées (78) formées sur l'élément conique; et la collerette (80, 82, 84) est fixée aux pattes prédécoupées (78) de l'espaceur de filetage.

16. Raccord fileté effilé selon la revendication 15, dans lequel il y a une pluralité de collerettes (80, 82, 84).

17. Raccord fileté effilé selon la revendication 16, dans lequel il y a une pluralité de pattes prédécoupées (78) formées sur l'élément conique, et dans lequel chaque collerette (80, 82, 84) est fixée aux pattes prédécoupées (78) de l'espaceur de filetage (50).

18. Raccord fileté effilé selon l'une quelconque des revendications 15 à 17, dans lequel l'élément conique est fixé sur l'un des jeux de filets du raccord fileté effilé avec un fixateur sélectionné dans le groupe constitué d'adhésifs, de pattes prédécoupées, du sablage du jeu de filets, du façonnage à froid du jeu de filets, du décapage à la grenaille du jeu de filets et du grenaillage du jeu de filets.

19. Raccord fileté effilé selon l'une quelconque des revendications 15 à 17, dans lequel l'élément conique est fixé sur l'un des jeux de filets du raccord fileté effilé avec un élément de fixation sélectionné dans le groupe constitué des vis, des verrous, des goupilles et des crans d'arrêt.

20. Raccord fileté effilé selon l'une quelconque des revendications 15 à 19, dans lequel la collerette est fixée sur l'un des épaulements.

21. Raccord fileté effilé selon l'une quelconque des revendications 15 à 20, dans lequel l'espaceur de filetage est à une position intermédiaire entre les jeux de filets, et la collerette est comprimée entre les épaulements.

22. Raccord fileté effilé selon la revendication 21, dans lequel la collerette est fixée sur l'un des épaulements.

23. Raccord fileté effilé selon l'une quelconque des revendications 15 à 22, dans lequel la collerette est fixée dans une rainure dans l'un des épaulements.

24. Raccord fileté effilé selon la revendication 23, dans lequel la collerette est fixée dans la rainure de l'épaulement associé au jeu de filets mâle et l'élément conique est fixé sur le jeu de filets femelle.

25. Raccord fileté effilé selon la revendication 23, dans lequel la collerette est fixée dans la rainure de l'épaulement associé au jeu de filets femelle et l'élément conique est fixé sur le jeu de filets mâle.

26. Raccord fileté effilé selon la revendication 23, dans lequel la collerette est fixée dans la rainure de l'épaulement associé au jeu de filets mâle et l'élément conique est fixé sur le jeu de filets mâle.

27. Raccord fileté effilé selon la revendication 23, dans lequel la collerette est fixée dans la rainure de l'épaulement associé au jeu de filets femelle et l'élément conique est fixé sur le jeu de filets femelle.

28. Raccord fileté effilé selon la revendication 23, dans lequel la rainure de l'épaulement où la collerette est fixée a une configuration, et dans lequel la configuration de la rainure est sélectionnée dans le groupe constitué de rainures en surplomb, de rainures en retrait, de rainures à extrémité droites, de rainures à côtés incurvés, de rainures à crans d'arrêt saillants, de rainures à crans d'arrêt renfoncés, de rainures en forme de "T" ayant des crans d'arrêt saillants, de rainures en forme de "T" ayant des encoches, de rainures en forme de "T" ayant des rainures secondaires, de rainures en forme de "T" ayant des rainures en surplomb, de rainures en forme de "T" ayant des rainures en retrait et leurs combinaisons.

29. Tige de forage comprenant un axe longitudinal, deux extrémités effilées, un jeu de filets sur chaque extrémité effilée, et un espaceur de filetage (50);
l'espaceur de filetage (50) comprenant un élément tronconique mince et creux;
l'élément conique comprenant une partie extérieure et une partie intérieure; et des filets ondulés (70, 74) formés sur les parties extérieure et intérieure;
dans laquelle l'élément conique de l'espaceur de filetage (50) est fixé sur l'un des jeux de filets de la tige de forage;
l'espaceur de filetage comprenant une collerette (80, 82, 84), et étant **caractérisée en ce que** l'espaceur de filetage comprend en outre une pluralité de pattes prédécoupées (78) formées sur l'élément conique; et la collerette (80, 82, 84) est fixée aux pattes prédécoupées (78) de l'espaceur de filetage (50).

30. Tige de forage selon la revendication 29, dans laquelle il y a une pluralité de collerettes (80, 82, 84).

31. Tige de forage selon la revendication 30, dans laquelle il y a une pluralité de pattes prédécoupées (78) formées sur l'élément conique et dans laquelle chaque collerette est fixée aux pattes prédécoupées (78) de l'espaceur de filetage.

32. Tige de forage selon l'une quelconque des revendications 29 à 31, dans laquelle l'élément conique est fixé sur l'un des jeux de filets avec un fixateur sélectionné dans le groupe constitué d'adhésifs, de pattes prédécoupées, du sablage du jeu de filets, du façonnage à froid du jeu de filets, du décapage à grenaille du jeu de filets et du grenaillage du jeu de filets.

33. Tige de forage selon l'une quelconque des revendications 29 à 31, dans laquelle l'élément conique est fixé sur l'un des jeux de filets de la tige de forage avec un élément de fixation sélectionné dans le groupe constitué des vis, des verrous, des goupilles et des crans d'arrêt.

34. Tige de forage selon l'une quelconque des revendications 29 à 33, comprenant un épaulement sur au moins l'une des extrémités effilées, dans laquelle la collerette est fixée sur l'épaulement.

35. Tige de forage selon l'une quelconque des revendications 29 à 33, dans laquelle l'une des extrémités effilées comprend un jeu de filets conjugué à un jeu de filets correspondant sur une seconde tige de forage, et des épaulements opposés adjacents aux jeux de filets; dans laquelle l'espaceur de filetage est à une position intermédiaire entre les jeux de filets, et la collerette est comprimée entre les épaulements.

36. Tige de forage selon la revendication 35, dans laquelle la collerette est fixée sur l'un des épaulements.

37. Tige de forage selon la revendication 36, dans laquelle la collerette est fixée dans une rainure dans l'un des épaulements.

38. Tige de forage selon la revendication 37, dans laquelle la collerette est fixée dans la rainure de l'épaulement associé à un jeu de filets mâle et l'élément conique est fixé sur un jeu de filets femelle.

39. Tige de forage selon la revendication 37, dans laquelle la collerette est fixée dans la rainure de l'épaulement associé à un jeu de filets femelle et l'élément conique est fixé sur un jeu de filets mâle.

40. Tige de forage selon la revendication 37, dans laquelle la collerette est fixée dans la rainure de l'épaulement associé à un jeu de filets mâle et l'élément conique est fixé sur le jeu de filets mâle.

41. Tige de forage selon la revendication 37, dans laquelle la collerette est fixée dans la rainure de l'épaulement associé à un jeu de filets femelle et l'élément conique est fixé sur le jeu de filets femelle.

42. Tige de forage selon la revendication 37, dans laquelle la rainure de l'épaulement où la collerette est fixée a une configuration, la configuration de la rainure est sélectionnée dans le groupe constitué de rainures en surplomb, de rainures en retrait, de rainures à extrémités droites, de rainures à côtés incurvés, de rainures à crans d'arrêt saillants, de rainures à crans d'arrêt renfoncés, de rainures en forme de "T" ayant des crans d'arrêt saillants, de rainures en forme de "T" ayant des encoches, de rainures en forme de "T" ayant des rainures secondaires, de rainures en forme de "T" ayant des rainures en surplomb, de rainures en forme de "T" ayant des rainures en retrait et leurs combinaisons.
